# EUROPEAN PATENT APPLICATION

(11) **EP 4 588 891 A1**
(43) Date of publication of application: **23.07.2025**
(21) Application number: 24152798.5
(22) Date of filing: 19.01.2024
(51) Int. Cl.: C01B 21/26, B01J 19/00, B01J 23/40, B01J 35/58, D04B 1/00

(54) **METHOD FOR REDUCING N2O FORMATION IN AN AMMONIA OXIDATION PROCESS, AND CATALYST UNIT TO DO SO**

(71) Applicant: Yara International ASA, 0277 Oslo (NO)
(72) Inventor: KNUDSEN, Per, 3936 Porsgrunn (NO); BUJALSKI, Jakub, 3914 Porsgrunn (NO); JAKOBTORWEIHEIN, Sven, 20253 Hamburg (DE)
(74) Representative: De Clercq & Partners

(57) **Abstract**

The invention relates to a method for reducing N₂O formation in an ammonia oxidation process, comprising the steps of:
- providing a process gas mixture comprising ammonia and oxygen;
- flowing the process gas mixture under oxidizing conditions subsequently through a first catalyst pack and at least one second catalyst pack, thereby obtaining a nitrogen-oxides containing gas;

wherein the first catalyst pack comprises a first type of catalytic metal wire, and wherein the second catalyst pack comprises a second type of catalytic metal wire,
wherein the cross-sectional area of the first type of catalytic metal wire is larger than the cross-sectional area of the second type of catalytic metal wire; and,
wherein the cross-sectional area of the first type of catalytic metal wire is at least 9,503 µm².

The invention further relates to a catalyst unit, suitable to be used in the method.

## Description

### FIELD OF THE INVENTION

The invention relates to the optimalisation of a catalyst arrangement. More in particular, to a catalyst arrangement that can be used in the catalytic oxidation of ammonia, for example in a larger nitric acid production process. Preferably, the catalyst arrangement is optimised to reduce the amount of N₂O that may be formed during the catalytic oxidation process. Preferably, the catalyst arrangement is optimised to have a high NO selectivity during the catalytic oxidation process.

### BACKGROUND OF THE INVENTION

The catalytic oxidation of ammonia is a common step in, amongst other processes, the nitric acid production process. The aim of the catalytic oxidation is to obtain a high conversion of ammonia into nitric oxide (NO). The formation of nitrous oxide (N₂O, aka dinitrogen oxide) during this catalytic oxidation step is a common side reaction. The formation of N₂O is problematic as, first of all, it lowers the NO yield and contaminates the desired NO gas, which is further transformed into nitric acid. Probably even more problematic is that N₂O is a highly potent greenhouse gas, with a Global Warming Potential (GWP) of about 265 (or 1 ton N₂O is equivalent to 265 tons of CO₂). Furthermore, N₂O can deplete the ozone layer and can over-nutrify sensitive habitats.

Hence, there is a demand for the reduction of N₂O formation and/or emission during catalytic oxidation processes. There is further a demand to increase the yield and/or selectivity for NO in a catalytic oxidation process, preferably of ammonia. There is further a demand to increase the lifetime of the catalyst used in catalytic oxidation processes.

It is accordingly one of the objects of the present invention to overcome or ameliorate one or more of the aforementioned disadvantages present in the market, or to meet any of the demands that are present in the market. Preferably the invention provides in solutions, that can be easily implemented in existing production plants and factories and/or do not require significant alterations to existing equipment.

### SUMMARY OF THE INVENTION

The present inventors have now surprisingly found that one or more of these objects can be obtained by providing gauzes made from a relatively thick catalytic metal wire as first gauze(s) in a catalyst unit in a catalytic oxidation process, followed by gauze(s) made from a relatively thinner catalytic metal wire. Preferably, the mesh opening of these first gauze(s) is wider compared to the mesh opening of gauzes deeper in the catalyst unit.

In a first aspect, the invention provides a method for reducing N₂O formation in an ammonia oxidation process, comprising the steps of:
- providing a process gas mixture comprising ammonia and oxygen;
- flowing the process gas mixture under oxidizing conditions subsequently through a first catalyst pack and at least one second catalyst pack, thereby obtaining a nitrogen-oxides containing gas;

wherein the first catalyst pack comprises a first type of catalytic metal wire, and wherein the second catalyst pack comprises a second type of catalytic metal wire,
wherein the cross-sectional area of the first type of catalytic metal wire is larger than the cross-sectional area of the second type of catalytic metal wire; and,
preferably, wherein the cross-sectional area of the first type of catalytic metal wire is at least 9,503 µm², preferably at least 12,272 µm², more preferably at least 15,394 µm².

In some embodiments, the first catalyst pack comprises one or more woven gauzes, woven from the first type of catalytic metal wire.

In some embodiments, the diameter or width of the first type of catalytic metal wire is at least 110 µm, preferably at least 125 µm, more preferably at least 140 µm.

In some embodiments, the distance between the centers of two following wires in the first catalyst pack is at least 400 µm, preferably at least 500 µm, more preferably at least 600 µm.

In some embodiments, the first catalyst pack comprises at least two woven gauzes, parallel orientated to each other, and relatively rotated to each other over an angle from 0.0° to at most 75.0°, preferably at least 25.0° to at most 60.0°, preferably at least 35.0° to at most 50.0°, more preferably about 45.0°.

In some embodiments, the second catalyst pack comprises one or more woven or knitted gauzes, woven or knitted with the second type of catalytic metal wire; preferably wherein the second catalyst pack comprises one or more woven gauzes, woven with the second type of catalytic metal wire.

In some embodiments, the mesh opening of the woven gauzes of the first catalyst pack, is larger than the mesh opening of the woven or knitted gauzes of the second catalyst pack, and/or wherein the cross-sectional area of the woven gauzes of the first catalyst pack, is larger than the cross-sectional area opening of the woven or knitted gauzes of the second catalyst pack.

In some embodiments, the cross-sectional area of the second type of catalytic metal wire is at most 7,854 µm², preferably at most 6,362 µm², preferably at most 5,027 µm², more preferably at most 4,536.5 µm².

In some embodiments, the ratio of the mesh opening of the woven gauze of the first catalyst pack over the mesh opening of the woven or knitted gauze of the second catalyst pack is at least 1.2, preferably at least 1.5, preferably at least 2.0, preferably at least 2.5, preferably at least 3.0, preferably at least 3.5, preferably at least 3.8, like 3.9.

In some embodiments, the ratio of the cross-sectional area of the first type of catalytic metal wire over the cross-sectional area of the second type of catalytic metal wire is at least 1.2, preferably at least 1.5, preferably at least 2.0, preferably at least 2.5, preferably at least 3.0, preferably at least 3.5, preferably at least 3.8, like 3.9.

In some embodiments, the first catalyst pack and the second catalyst pack are housed in the same catalyst unit.

In some embodiments, the second catalyst pack comprises at least 6, preferably at least 7, more preferably at least 8 woven and/or knitted gauzes, parallel orientated to each other, optionally rotated compared to the previous gauze.

In some embodiments, the first type of catalytic metal wire and/or the second type of catalytic metal wire comprise platinum, palladium, rhodium or an alloy comprising platinum, rhodium and/or palladium.

The invention further provides in a catalyst unit, comprising:
- a first catalyst pack, comprising a first type of catalytic metal wire; and,
- a second catalyst pack, comprising a second type of catalytic metal wire;

wherein the cross-sectional area of the first catalytic metal wire is larger than the cross-sectional area of the second type of catalytic metal wire; and,
wherein the cross-sectional area of the first type of catalytic metal wire is at least 9,503 µm², preferably at least 12,272 µm², more preferably at least 15,394 µm².

The invention further provides in the use of catalyst unit according to claim 14 for the reduction of N₂O formation in an ammonia oxidation process.

Preferred embodiments of the invention are disclosed in the detailed description and appended claims. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous. (Preferred) embodiments of one aspect of the invention are also (preferred) embodiments of all other aspects of the invention.

### BRIEF DESCRIPTION OF THE FIGURES

**Figure 1a and 1b** depict two views of the catalyst unit, according to an embodiment of the invention.

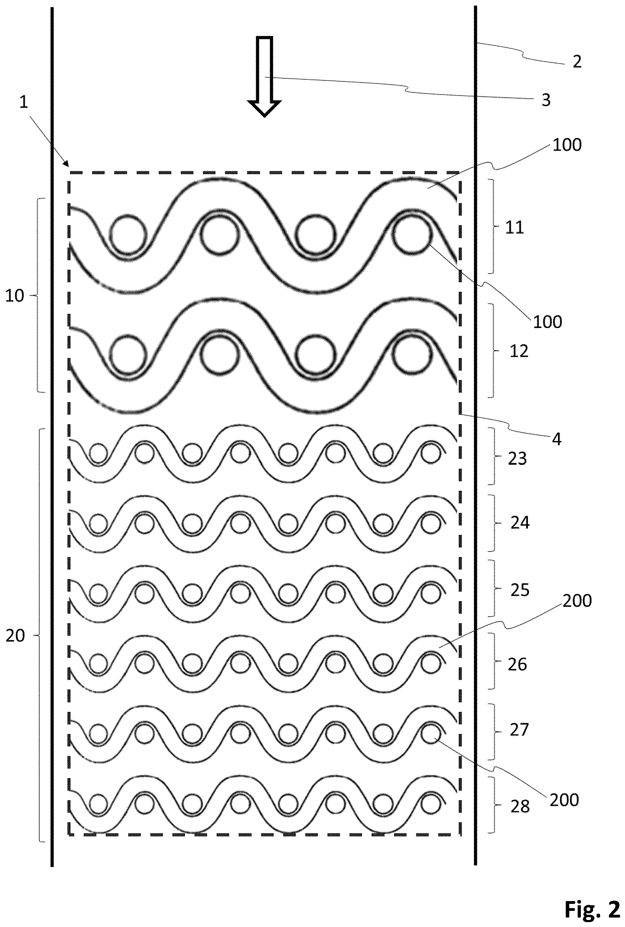

**Figure 2** depicts a cross-sectional area of a schematic representation of a catalyst unit, according to an embodiment of the invention.

### DETAILED DESCRIPTION OF THE INVENTION

When describing the invention, the terms used are to be construed in accordance with the following definitions, unless a context dictates otherwise.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some, but not other features included in other embodiments, combinations of features of different embodiments are meant to be within the scope of the invention, and form different embodiments, as would be understood by those in the art. For example, in the following claims and statements, any one of the embodiments can be used in any combination.

The terms "comprising", "comprises" and "comprised of" as used herein are synonymous with "including", "includes" or "containing", "contains", and are inclusive or open-ended and do not exclude additional, non-recited members, elements, or method steps. It will be appreciated that the terms "comprising", "comprises" and "comprised of" as used herein comprise the terms "consisting of", "consists" and "consists of".

As used in the specification and the appended claims, the singular forms "a", "an," and "the" include plural referents unless the context clearly dictates otherwise. By way of example, "a step" means one step or more than one step.

Unless defined otherwise, all technical and scientific terms used herein have the same meaning as is commonly understood by one of skill in the art.

The recitation of numerical ranges by endpoints includes all integer numbers and, where appropriate, fractions subsumed within that range (e.g., 1 to 5 can include 1, 2, 3, 4 when referring to, for example, a number of elements, and can also include 1.5, 2, 2.75 and 3.80, when referring to, for example, measurements). The recitation of endpoints also includes the end point values themselves (e.g., from 1.0 to 5.0 includes both 1.0 and 5.0). Any numerical range recited herein is intended to include all sub-ranges subsumed therein.

The term "about" as used herein when referring to a measurable value such as a parameter, an amount, a temporal duration, and the like, is meant to encompass variations of +/-10% or less, preferably +/-5% or less, more preferably +/-1% or less, of and from the specified value, insofar such variations are appropriate to perform in the disclosed invention. It is to be understood that the value to which the modifier "about" refers is itself also specifically, and preferably, disclosed.

The terms "wt%", "vol%", or "mol%" refers to a weight percentage of a component, a volume percentage of a component, or molar percentage of a component, respectively, based on the total weight, the total volume of material, or total moles, that includes the component.

When describing the present invention, the terms used are to be construed in accordance with the following definitions, unless a context dictates otherwise.

In a first aspect, the invention provides a method for reducing N₂O formation in an ammonia oxidation process, comprising the steps of:
- providing a process gas mixture comprising ammonia and oxygen;
- flowing the process gas mixture under oxidizing conditions subsequently through a first catalyst pack and at least one second catalyst pack, thereby obtaining a nitrogen-oxides containing gas;

wherein the first catalyst pack comprises a first type of catalytic metal wire, and wherein the second catalyst pack comprises a second type of catalytic metal wire,
wherein the cross-sectional area of the first type of catalytic metal wire is larger than the cross-sectional area of the second type of catalytic metal wire; and,
preferably, wherein the cross-sectional area of the first type of catalytic metal wire is at least 9,503 µm² (corresponding to a diameter of 110 µm for round wires), preferably at least 12,272 µm² (corresponding to a diameter of 125 µm for round wires), more preferably at least 15,394 µm² (corresponding to a diameter of 140 µm for round wires).

It was found that such first type catalytic metal wires may reduce the formation of N₂O while the overall process still provides a satisfying selectivity and/or yield for NO formation in an ammonia oxidation process. It may appear that the ticker first type of catalytic metal wire may reduce the formation of N₂O, while the thinner second type of catalytic metal wire may ensure the high selectivity and/or yield for NO formation. As the gas mixture first hits the ticker first type of catalytic metal wire, these wires may protect the thinner second type of catalytic metal wire from the high temperatures / harsh conditions in the ammonia oxidation process, and thereby prolong the lifetime of the catalyst packs. This may lead to less down time to replace the catalyst packs, and to a more resourceful use of the often expensive catalytic metal wires.

In some embodiments, the first catalyst pack comprises one or more, preferably two or more, woven gauzes, woven from the first type of catalytic metal wire. Preferably, the weave of the woven gauzes is an open weave, preferably the mesh openings in the weave are larger than the cross-sectional area of the wires used to make the weave. This may reduce the back pressure of sending the gas mixture through the gauzes.

In some embodiments, the first type catalytic metal wire and/or the second type catalytic metal wire have an elliptical, but preferably a round cross section. As such wires do not have corners, there may be less wear of the wires, as often corners are particularly sensitive to wear and corrosion. Hence, the lifetime of the catalyst may be increased by such wires.

In some embodiments, the diameter (d) or width of the first type of catalytic metal wire is at least 110 µm, preferably at least 125 µm, more preferably at least 140 µm.

In some embodiments, the diameter (d) or width of the first type of catalytic metal wire is at least 110 µm to at most 300 µm, preferably at least 125 µm to at most 250 µm, preferably at least 140 µm to at most 200 µm.

In some embodiments, the diameter (d) or width of the second type of catalytic metal wire is at least 20 µm, preferably at least 50 µm, preferably at least 70 µm, preferably at least 75 µm. Such wires may provide a sufficient lifetime of the catalyst.

In some embodiments, the diameter (d) or width of the second type of catalytic metal wire is at least 20 µm to at most 150 µm, preferably at least 50µm to at most 125 µm, preferably at least 70 µm to at most 100 µm, preferably at least 75 µm to at most 90 µm.

In some embodiments, the diameter (*d*) or width of the second type of catalytic metal wire is at most 150 µm, preferably at most 125 µm, preferably at most 100 µm, preferably at most 90 µm. In some embodiments, the distance (*l*) between the centers of two following wires in the first catalyst pack is at least 400 µm, preferably at least 500 µm, more preferably at least 600 µm. This may ensure an open weave for the gas mixture to pass through.

In some embodiments, the distance (*l*) between the centers of two following wires in the first catalyst pack is at least 400 µm to most 1500 µm, preferably at least 500 µm to at most 1200 µm, preferably at least 600 µm to at most 1000 µm, preferably at least 600 µm to at most 800 µm. This may ensure an open weave for the gas mixture to pass through, yet not too open so that the gas mixture comes in contact with the wires sufficiently enough for catalytic reaction.

In some embodiments, the distance (*l*) between the centers of two following wires in the second catalyst pack is at least 100 µm, preferably at least 200 µm, more preferably at least 300 µm. This may ensure an open weave for the gas mixture to pass through.

In some embodiments, the distance (*l*) between the centers of two following wires in the second catalyst pack is at least 100 µm to most 750 µm, preferably at least 150 µm to at most 600 µm, preferably at least 200 µm to at most 500 µm, preferably at least 250 µm to at most 400 µm. This may ensure a sufficient contact between the wires and the gas mixture for catalytic reaction, such as to achieve a high NO production.

In some embodiments, the distance between the centers of two following wires in the first catalyst pack is at least 2.5 times, at least 2.6 times, at least 2.7 times, at least 3.0 times, at least 3.3 times, at least 3.5 times, preferably at least 4.0 times the diameter or width of the first type of catalytic metal wire.

In some embodiments, the distance between the centers of two following wires in the second catalyst pack is at least 2.5 times, at least 2.6 times, at least 2.7 times, at least 3. 0 times, at least 3.3 times, at least 3.5 times, preferably at least 4.0 times the diameter or width of the second type of catalytic metal wire.

In some embodiments, the first catalyst pack comprises at least two woven gauzes, parallel orientated to each other, and relatively rotated to each other over an angel from 0.0° to at most 75.0°, preferably at least 25.0° to at most 60.0°, preferably at least 35.0° to at most 50.0°, more preferably about 45.0°.

A gauze generally extends in two directions, these two directions determining a two-dimensional plane for each gauze. As used herein, the term "parallel orientated gauzes" refers to the orientation of these two dimensional planes. However, in these parallel orientated planes, gauzes may be rotated compared to a gauze from a different plane. Preferably, the different gauzes are stacked, preferably on top of each other.

In some embodiments, the second catalyst pack comprises one or more woven or knitted gauzes, woven or knitted with the second type of catalytic metal wire; preferably wherein the second catalyst pack comprises one or more woven gauzes, woven with the second type of catalytic metal wire.

In some embodiments, the second catalyst pack comprises at least four, preferably at least five, preferably at least six, preferably at least seven, preferably at least eight woven or knitted gauzes, woven or knitted with the second type of catalytic metal wire. Such catalyst packs may ensure a high NO production.

In some embodiments, the cross-sectional area of the second type of catalytic metal wire is at most 7,854 µm² (corresponding to a diameter of 100 µm for round wires), preferably at most 6,362 µm² (corresponding to a diameter of 90 µm for round wires), preferably at most 5,027 µm² (corresponding to a diameter of 80 µm for round wires), more preferably at most 4,536.5 µm² (corresponding to a diameter of 76 µm for round wires).

In some embodiments, the mesh opening of the woven gauzes of the first catalyst pack, is larger than the mesh opening of the woven or knitted gauzes of the second catalyst pack, and/or wherein the cross-sectional area of the woven gauzes of the first catalyst pack, is larger than the cross-sectional area opening of the woven or knitted gauzes of the second catalyst pack.

As used herein, the term "cross-sectional area" may refer to the area of the cross-section of the wire, wherein the cross-section is made perpendicular on the wire.

In some embodiments, the catalyst unit may comprise a third catalyst pack, wherein the third catalyst pack comprises a third catalytic metal wire, wherein the cross-sectional area of the third catalytic metal wire is smaller than the cross-sectional area of the second catalytic metal wire. In some embodiment, the mesh openings in the third catalyst pack, are smaller than the mesh opening in the second catalyst pack. Preferably, the third catalyst pack comprises woven or knitted gauzes, woven or knitted from the third catalytic metal wire. Preferably, the third catalyst pack is placed downstream from the second catalyst pack. It should be understood that in some embodiments, the catalyst unit may even comprise and fourth catalyst pack, optionally a fifth catalyst pack, and so on, each times comprising a thinner catalytic metal wire and/or a smaller mesh opening, compared to the previous catalyst pack.

In some embodiments, the ratio of the cross-sectional area of the first type of catalytic metal wire over the cross-sectional area of the second type of catalytic metal wire is at least 1.2, preferably at least 1.5, preferably at least 2.0, preferably at least 2.5, preferably at least 3.0, preferably at least 3.5, preferably at least 3.8, like 3.9.

In some embodiments, the first catalyst pack and the second catalyst pack are housed in the same catalyst unit.

In some embodiments, the ratio of the mesh opening of the woven gauze of the first catalyst pack over the mesh opening of the woven or knitted gauze of the second catalyst pack is at least 1.2, preferably at least 1.5, preferably at least 2.0, preferably at least 2.5, preferably at least 3.0, preferably at least 3.5, preferably at least 3.8, like 3.9.

In some embodiments, the second catalyst pack comprises at least 6, preferably at least 7, more preferably at least 8 woven and/or knitted gauzes, parallel orientated to each other, optionally rotated compared to the previous gauze.

In some embodiments, the first catalyst pack comprises at least two woven gauzes, woven from the first type of catalytic metal wire, and wherein two consecutive woven gauzes are preferably rotated relative to each other over an angle from at least 25° to at most 65°, preferably at least 30° to at most 60°, preferably at least 35° to at most 55°, preferably at least 40° to at most 45°; and/or,
the second catalyst pack comprises at least four, preferably at least 6, preferably at least 8 woven gauzes, woven from the second type of catalytic metal wire, and wherein two consecutive woven gauzes are preferably rotated relative to each other over an angle from at least 3° to at most 45°, preferably at least 5° to at most 25°, preferably at least 7° to at most 15°, preferably at least 9° to at most 12°.

In some embodiments, the first catalyst pack and the second catalyst pack are rotated relative to each other over an angle from at least 25° to at most 65°, preferably at least 30° to at most 60°, preferably at least 35° to at most 55°, preferably at least 40° to at most 45°.

In some embodiments, the first type of catalytic metal wire and/or the second type of catalytic metal wire comprise platinum, palladium, rhodium or an alloy comprising platinum, rhodium and/or palladium.

In some embodiments, the obtained nitrogen-oxides containing gas comprises at least 75.0 vol% NO, preferably at least 80.0 vol% NO, preferably at least 85.0 vol% NO, preferably at least 90.0 vol% NO, preferably at least 95.0 vol% NO, preferably at least 98.0 vol% NO, preferably at least 99.0 vol% NO, wherein the vol% is expressed compared to the total volume of the obtain nitrogen-oxides containing gas.

In some embodiments, the method comprises the step of oxidizing NO to NO₂.

In some embodiments, the method comprises the step of contacting the obtained nitrogen-oxides containing gas with water, preferably scrubbing with water. This may allow the formation of nitric acid or a nitric acid solution.

In some embodiments, the method comprises the step of emitting the remaining gas after the contacting with water step.

In some embodiments, the temperature of the gas mixture, before being flown through the first catalyst pack is at least 100°C, preferably at least 125°C, preferably at least 150°C, preferably at least 175°C, preferably at least 200°C, preferably at least 225°C, preferably at least 250°C.

In some embodiments, the pressure of the gas mixture, before being flown through the first catalyst pack is at least 1.0 atm, preferably at least 1.5 atm, preferably at least 2.0 atm, preferably at least 2.5 atm, preferably at least 3.0 atm, preferably at least 3.5 atm, preferably at least 4.0 atm, preferably at least 4.5 atm, preferably at least 5.0 atm.

In some embodiments, the gas mixture comprises about 4 volume parts ammonia to about 5 volume parts oxygen gas.

The invention provides in a catalyst unit, comprising:
- a first catalyst pack, comprising a first type of catalytic metal wire; and,
- a second catalyst pack, comprising a second type of catalytic metal wire;

wherein the cross-sectional area of the first catalytic metal wire is larger than the cross-sectional area of the second type of catalytic metal wire; and,
preferably, wherein the cross-sectional area of the first type of catalytic metal wire is at least 9,503 µm² (corresponding to a diameter of 110 µm for round wires), preferably at least 12,272 µm² (corresponding to a diameter of 125 µm for round wires), more preferably at least 15,394 µm² (corresponding to a diameter of 140 µm for round wires).

In some embodiments is the catalyst unit, a catalyst unit configured to be used in an embodiment of the methods or use disclosed herein.

The invention provides in the use of catalyst unit according to an embodiment described herein, for the reduction of N₂O formation in an ammonia oxidation process.

It should be understood that (preferred) embodiments of the method are also (preferred) embodiments of the catalyst unit and the use, and *vice versa.*

The invention will be more readily understood by reference to the following examples, which are included merely for purpose of illustration of certain aspects and embodiments of the present invention and are not intended to limit the invention.

### EXAMPLES

In these examples, the numbering of the gauzes starts from the gauze that is intended to be hit first by a flow of the process gas. In other words, the process gas first hits Gauze # 1, to then hit Gauze #2, to then het Gauze # 3, and so on. Gauze # 1 is therefore up-flow form Gauze # 2; and Gauze # 8 is downflow from Gauze # 7.

As used herein, the parameter "rotation" as used in the examples, refers to the relative angel of which one gauze is rotated compared to the first gauze in the catalyst unit.

In these examples, the composition of the wires is the same.

### Comparative Example:

The following catalyst until was prepared as comparative example comprising 8 woven gauzes made from catalytic wires made with a round cross-sectional area, with the following characteristics:

**Table 1: catalyst used as comparative example**

| **Gauze #** | **Wire diameter (*d*) [µm]** | **Distance between centers of wires (*l*) [µm]** | **Rotation [°]** |
|---|---|---|---|
| 1 | 76 | 312.5 | 0 |
| 2 | 76 | 312.5 | 20 |
| 3 | 76 | 312.5 | 40 |
| 4 | 76 | 312.5 | 60 |
| 5 | 76 | 312.5 | 80 |
| 6 | 76 | 312.5 | 100 |
| 7 | 76 | 312.5 | 120 |
| 8 | 76 | 312.5 | 140 |

### Example 1

The following catalyst unit according to an embodiment if the invention was prepared, comprising 8 woven gauzes made from wires made with a round cross-sectional area, with the following characteristics:

**Table 2: catalyst until according to an embodiment of the invention**

| **Gauze #** | **Wire diameter (*d*) [µm]** | **Distance between centers of wires (*l*) [µm]** | **Rotation [°]** |
|---|---|---|---|
| 1 | 150 | 616.8 | 0 |
| 2 | 150 | 616.8 | 45 |
| 3 | 76 | 312.5 | 0 |
| 4 | 76 | 312.5 | 20 |
| 5 | 76 | 312.5 | 40 |
| 6 | 76 | 312.5 | 60 |
| 7 | 76 | 312.5 | 80 |
| 8 | 76 | 312.5 | 100 |

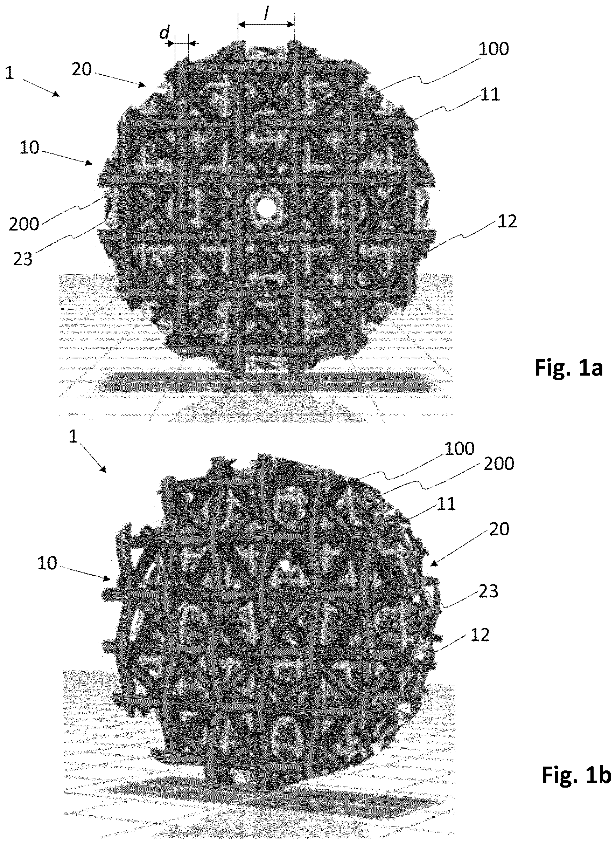

The catalyst unit of Example 1 is depictured in Fig 1a, which is a frontal view of the catalyst unit (1), and Fig. 1b, which is a perspective view of the catalyst unit (1). The catalyst unit (1) comprises a first catalyst pack (10), which is made up of first woven gauze #1 (11), and first woven gauze #2 (12), they are parallel orientated (staged on top of each other), but rotated over an angel of 45°, as can be seen in the Figures 1a and 1b. The first woven gauze #1 (11), and the first woven gauze #2 (12) are woven from a first catalytic wire (100).

The catalyst unit (1) further comprises a second catalyst pack (20), stacked underneath the first catalyst pack (10), wherein the second catalyst pack (20) is made up of second woven gauze #3 (23) to second woven gauze #8 (not distinguishable in figures). The second woven gauze are parallel orientated (staged on top of each other), and rotated compared to Gauze #1 as indicated in Table 2. The second woven gauzes are woven from a second catalytic wire (200).

The diameter d of the wires used and the distance *l* between the centres of wires in the different gauzes is as defined in Table 2.

A comparison between selected properties of the catalyst unit of the comparative example and the catalyst unit of Example 1 is given in the following table, in similar oxidation experiments:

**Table 3: properties of the catalyst units**

| **Property** | **Catalyst unit of Comparative Example** | **Catalyst unit of Example 1** | **Relative change** |
|---|---|---|---|
| A_{cat} / Aᵢₙₗₑₜ [-] | 12.14 | 12.10 | -0.3% |
| V_{cat} / Aᵢₙₗₑₜ [mm] | 0.222 | 0.276 | +24.3% |
| Yield NO [-] | 0.958 | 0.966 | +0.85% |
| Conversion NH₃ [-] | 0.9975 | 0.9951 | -0.24% |
| Selectivity NO [-] | 0.961 | 0.971 | +1.04% |
| Selectivity N₂O [-] | 0.039 | 0.029 | -26.32% |

Wherein:
- A_{cat} is the total surface of all catalytic wires in the catalyst unit
- V_{cat} is the volume all catalytic wires in the catalyst unit These experiments show that for the catalyst unit according to Example 1 a significant drop in N₂O selectivity is observed, compared to the experiment using a catalyst unit according to the Comparative Example. It can further noticed that the selectivity for NO and the NO yield increase while the conversion of NH₃ remains acceptable.

### Example 2:

Figure 1 depicts a cross-sectional area of a schematic representation of a catalyst unit (1), according to an embodiment of the invention, placed in a duct (2), through which a gas mixture, comprising ammonia and oxygen, flows in the direction indicated by the arrow (3). The catalyst unit (1) comprises a first catalyst pack (10), which is placed upstream from a second catalyst pack (20). Both the first catalyst pack (10) and the second catalyst pack (20) are housed in the same housing (4). The first catalyst pack (10) is made up of a stack of two first woven gauzes (11, 12), which are woven with a first catalytic metal wire (100). In this particular example the diameter (d) of the first catalytic metal wire (100) is 150 µm. The rotation between the first gauzes (11, 12) is 0°. However, to arrive at a catalyst unit, similar to the one in Example 1, woven gauzes (12), can be rotated over an angel of 45°, compared to woven gauze (11).

The second catalyst pack (20) is made up of a stack of six second woven gauzes (23, 24, 25, 26, 27, 28), parallel oriented to each other, which are woven with a second catalytic metal wire (200). In this particular example the diameter (d) of the second catalytic metal wire (200) is 76 µm. The rotation between the second gauzes (23, 24, 25, 26, 27, 28) is 0°. However, to arrive at a catalyst unit, similar to the one in Example 1, the consecutive six second woven gauzes (23, 24, 25, 26, 27, 28) can be rotated over an angle of 20 ° each.

It should be understood that the example can easily be modified by varying the amount of gauzes or gauze packs in the catalyst unit. For example, by placing two additional second woven gauzes, in the second catalyst pack, a catalyst unit comprising two first woven gauzes and eight second woven gauzes can be achieved.

It is to be understood that although preferred embodiments and/or materials have been discussed for providing embodiments according to the present invention, various modifications or changes may be made without departing from the scope and spirit of this invention.

## Claims

1. A method for reducing N₂O formation in an ammonia oxidation process, comprising the steps of:
- providing a process gas mixture comprising ammonia and oxygen;
- flowing the process gas mixture under oxidizing conditions subsequently through a first catalyst pack and at least one second catalyst pack, thereby obtaining a nitrogen-oxides containing gas;
wherein the first catalyst pack comprises a first type of catalytic metal wire, and wherein the second catalyst pack comprises a second type of catalytic metal wire,
wherein the cross-sectional area of the first type of catalytic metal wire is larger than the cross-sectional area of the second type of catalytic metal wire; and,
wherein the cross-sectional area of the first type of catalytic metal wire is at least 9,503 µm², preferably at least 12,272 µm², more preferably at least 15,394 µm².

2. The method according to claim 1, wherein the first catalyst pack comprises one or more woven gauzes, woven from the first type of catalytic metal wire.

3. The method according to claim 1 or 2, wherein the diameter or width of the first type of catalytic metal wire is at least 110 µm, preferably at least 125 µm, more preferably at least 140 µm.

4. The method according to any one of the previous claims, wherein the distance between the centers of two following wires in the first catalyst pack is at least 400 µm, preferably at least 500 µm, more preferably at least 600 µm.

5. The method according to any one of the previous claims, wherein the first catalyst pack comprises at least two woven gauzes, parallel orientated to each other, and relatively rotated to each other over an angel from 0.0° to at most 75.0°, preferably at least 25.0° to at most 60.0°, preferably at least 35.0° to at most 50.0°, more preferably about 45.0°.

6. The method according to any one of the previous claims, wherein the second catalyst pack comprises one or more woven or knitted gauzes, woven or knitted with the second type of catalytic metal wire; preferably wherein the second catalyst pack comprises one or more woven gauzes, woven with the second type of catalytic metal wire.

7. The method according to any one of previous claims, wherein the mesh opening of the woven gauzes of the first catalyst pack, is larger than the mesh opening of the woven or knitted gauzes of the second catalyst pack, and/or wherein the cross-sectional area of the woven gauzes of the first catalyst pack, is larger than the cross-sectional area opening of the woven or knitted gauzes of the second catalyst pack.

8. The method according to any one of the previous claims, wherein the cross-sectional area of the second type of catalytic metal wire is at most 7,854 µm², preferably at most 6,362 µm², preferably at most 5,027 µm², more preferably at most 4,536.5 µm².

9. The method according to any one of the previous claims, wherein the ratio of the mesh opening of the woven gauze of the first catalyst pack over the mesh opening of the woven or knitted gauze of the second catalyst pack is at least 1.2, preferably at least 1.5, preferably at least 2.0, preferably at least 2.5, preferably at least 3.0, preferably at least 3.5, preferably at least 3.8, like 3.9.

10. The method according to any one of the previous claims, wherein the ratio of the cross-sectional area of the first type of catalytic metal wire over the cross-sectional area of the second type of catalytic metal wire is at least 1.2, preferably at least 1.5, preferably at least 2.0, preferably at least 2.5, preferably at least 3.0, preferably at least 3.5, preferably at least 3.8, like 3.9.

11. The method according to any one of the previous claims, wherein the first catalyst pack and the second catalyst pack are housed in the same catalyst unit.

12. The method according to any one of the previous claims, wherein the second catalyst pack comprises at least 6, preferably at least 7, more preferably at least 8 woven and/or knitted gauzes, parallel orientated to each other, optionally rotated compared to the previous gauze.

13. The method according to any one of the previous claims, wherein the first type of catalytic metal wire and/or the second type of catalytic metal wire comprise platinum, palladium, rhodium or an alloy comprising platinum, rhodium and/or palladium.

14. A catalyst unit, comprising:
- a first catalyst pack, comprising a first type of catalytic metal wire; and,
- a second catalyst pack, comprising a second type of catalytic metal wire;
wherein the cross-sectional area of the first catalytic metal wire is larger than the cross-sectional area of the second type of catalytic metal wire; and,
wherein the cross-sectional area of the first type of catalytic metal wire is at least 9,503 µm², preferably at least 12,272 µm², more preferably at least 15,394 µm².

15. Use of catalyst unit according to claim 14 for the reduction of N₂O formation in an ammonia oxidation process.
